(19) Europäisches Patentamt
European Patent Office
Office européen des brevets

(11) Veröffentlichungsnummer: **0 139 294**
**B1**

(12) # EUROPÄISCHE PATENTSCHRIFT

(45) Veröffentlichungstag der Patentschrift: **20.04.88**

(51) Int. Cl.⁴: **C 09 B 67/48,** C 09 B 67/10, C 09 B 1/34

(21) Anmeldenummer: **84112438.1**

(22) Anmeldetag: **16.10.84**

(54) **Neue Modifikation des Farbstoffs C.I. Acid Blue 324.**

(30) Priorität: **26.10.83 US 545795**

(43) Veröffentlichungstag der Anmeldung: **02.05.85 Patentblatt 85/18**

(45) Bekanntmachung des Hinweises auf die Patenterteilung: **20.04.88 Patentblatt 88/16**

(84) Benannte Vertragsstaaten: **BE CH DE FR GB IT LI**

(56) Entgegenhaltungen:
**DE - B - 2 710 152**
**FR - A - 685 399**
**FR - A - 695 807**
**US - A - 4 388 078**

**CHEMICAL ABSTRACTS, Band 98, Nr. 14, April 1983, Seite 79, Nr. 108874a, Columbus, Ohio, US;**

(73) Patentinhaber: **MOBAY CORPORATION, Mobay Road, Pittsburgh Pennsylvania 15205-9741 (US)**

(72) Erfinder: **Sandefur, Charles W., 201 Glebe Road, Summerville South Carolina 29483 (US)**
Erfinder: **Thomas, Thomas J., 213 Brailsford Road, Summerville South Carolina 29483 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

**EP 0 139 294 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Modifikationen eines Säurefarbstoffs, der für seine Eignung zum Färben sowohl von Wolle als auch von Nylon bekannt ist (DE-B 2 710 152), sowie ein Verfahren zur Gewinnung dieser Farbstoff-Modifikationen.

Die Säurefarbstoffe wurden ursprünglich zur Färbung von Wolle entwickelt und dementsprechend mit einem gewissen Grad von Wasserlöslichkeit ausgestattet. Allgemein wurde angenommen, dass diese Farbstoffe in Lösung gingen, bevor sie die Färbung des Woll-Substrats bewirkten. Man hielt diesen Mechanismus bei allen Säuefarbstoffen für zutreffend, einschliesslich derjenigen auf der Basis von Anthrachinon-Chromophoren. Dementsprechend glaubte man, dass die Kristallform solcher Farbstoffe für ihre Färbeeigenschaften bedeutungslos sei, entsprechende Untersuchungen wurden nicht sehr eingehend durchgeführt.

Später wurde gefunden, dass einige dieser Farbstoffe sich auch zur Färbung anderer Textilmaterialien wie Polyamide eignen, jedoch blieb das Lösen der Farbstoffe ein wichtiges Merkmal für ihr Aufbringen auf das Substrat. Die Bedingungen des Aufbringens und die Natur des Substrats wurden verändert, jedoch gaben diese Veränderungen keinen neuerlichen Anlass, die Kristallstruktur der Säurefarbstoffe zu untersuchen.

Dieses mangelnde Interesse an der Kristallstruktur lässt sich wahrscheinlich der Tatsache zuschreiben, dass die Säurefarbstoffe vor ihrem Einsatz typischerweise aufgelöst werden, so dass jegliche Kristallstruktur, die sie einmal besessen haben könnten, zerstört wird. Dies steht in scharfem Gegensatz zu der anderen grossen Klasse der Färbemittel, den Pigmenten, die ohne Auflösen zur Anwendung gebracht werden. Aus diesem Grunde sind sowohl die Kristallstrukturen von Pigmenten als auch die Verfahren zur Veränderung solcher Kristallstrukturen eingehend erforscht.

Berichtet wurde über die Kristall-Modifizierung eines Farbstoffs, der sich nicht in einem Färbebad auflöst, von dem jedoch angenommen wird, dass er sich beim Färben in der Faser löst. Insbesondere berichtet die US-PS 4 388 078 die Kristall-Modifizierung eines dispersen Farbstoffs, der seine «Vorfärbe»-Eigenschaft der Stabilität der wässrigen Dispersion ändert.

Die Modifizierung der Kristallform textiler Färbehilfsmittel, die vor dem Aufbringen gelöst werden, ist ebenfalls beschrieben. Insbesondere die US-PSen 3 472 842, 3 511 833, 3 925 260 und 3 994 834 und die GB-PSen 997 044 und 1 293 804 berichten über die Modifizierung der Kristallformen optischer Aufheller zur Verbesserung ihrer Farbe in trockenen Formulierungen wie Wäsche-Detergentien.

Die Abbildungen Fig. 1 und Fig. 2 zeigen Debye-Scherrer-Röntgenbeugungsdiagramme, die mit der Kα-Emissionslinie eines Kupfer-Targets der Wellenlänge 0,154056 nm (1,54056 Å) erhalten wurden. Auf der Abszisse ist der doppelte Beugungswinkel in ° aufgetragen, und auf der Ordinate ist die relative Intensität der Reflexion aufgetragen. Die den ausgewählten Reflexionsmaxima entsprechenden Abstände d sind quer am oberen Rand der Abbildungen angegeben. Fig. 1 ist repräsentativ für die bevorzugte Kristallstruktur gemäss der vorliegenden Erfindung, während Fig. 2 die Kristallstruktur des Farbstoffs in seiner typischen Handelsform wiedergibt. Fig. 2 ist doppelt so stark vergrössert wie Fig. 1.

Die vorliegende Erfindung umfasst besondere Modifikationen des Farbstoffs Color Index Acid Blue 324, der die nachstehende Struktur

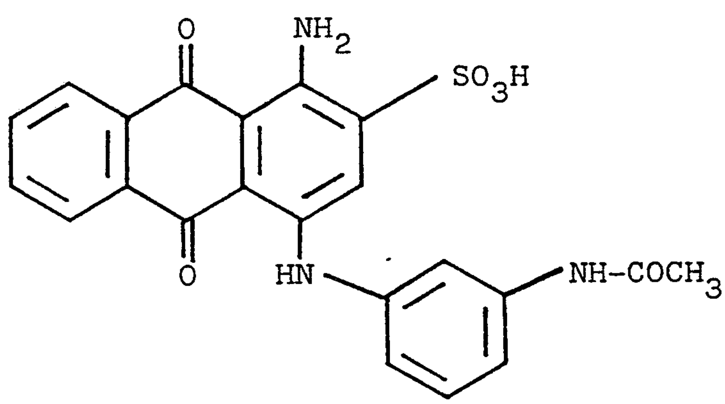

besitzt, und ein Verfahren zur Herstellung dieser Modifikationen. Diese Modifikationen sind charakterisiert durch

a) eine Reihe sehr starker bis mässig starker Reflexionen im Debye-Scherrer-Röntgenbeugungsdiagramm, welche den folgenden Gitterebenenabständen d entsprechen: 1,40, 0,68, 0,57, 0,54, 0,46, 0,45, 0,375 und 0,329 nm (14,0, 6,8, 5,7, 5,4, 4,6, 4,5, 3,75 und 3,29 Å); hierbei handelt es sich um die bevorzugte Modifikation.

b) starke Reflexionen im Debye-Scherrer-Röntgenbeugungsdiagramm, welche Gitterebenenabständen von d gleich 1,42 und 0,46 nm (14,2 und 4,6 Å) entsprechen (alternative Modifikation).

| Relative Stärke der Reflexion | Abstände d in nm (Å) | | | |
|---|---|---|---|---|
| | Bevorzugte Modifikation | | Alternative Modifikation | |
| sehr stark | 1,40 | (14,0) | 1,42 | (14,2) |
| stark | 0,46 | (4,6) | | |
| ziemlich stark | 0,329 | (3,29) | 0,46 | (4,6) |
| mässig stark | 0,68 | (6,8) | | |
| mässig stark | 0,57 | (5,7) | | |
| mässig stark | 0,54 | (5,4) | | |
| mässig stark | 0,45 | (4,5) | | |
| mässig stark | 0,375 | (3,75) | | |

Die Modifikationen der Kristallstruktur des Farbstoffs Color Index Acid Blue 324 gemäss Erfindung werden dadurch erhalten, dass man diesen Farbstoff bestimmten speziellen Bedingungen aussetzt. Dieser Farbstoff tritt so, wie er bei seiner Synthese erhalten wird, typischerweise in Form spitzer dünner Nadeln auf, die mikroskopisch zu erkennen sind.

Bei der Überführung in die bevorzugte Modifikation gemäss der vorliegenden Erfindung gehen diese Nadeln in Parallelogramme mit typischen Seitenlängen zwischen 20 und 50 µm über. Diese neue Modifikation lässt sich sehr viel leichter aus einem wässrigen Medium abfiltrieren als die ursprüngliche Form des Farbstoffs. Weiterhin ergibt sie beim Dispergieren in einem wässrigen Medium bei der gleichen Feststoff-Beaufschlagung wie bei der Standard-Form des Farbstoffs eine viel niedrigere Viskosität. Sie ermöglicht auch die Gewinnung eines reineren Farbstoffs aus einem wässrigen Medium. Schliesslich kann durch Filtration aus einem wässrigen Medium ein viel höherer Prozentsatz an Feststoffen gewonnen werden. Bei der Überführung in die alternative Modifikation gehen diese Nadeln in hexagonale Kristalle mit etwa 150 µm Seitenlänge über. Diese Modifikation lässt sich ebenfalls aus einem wässrigen Medium leichter filtrieren und liefert einen Filterkuchen mit höherem Feststoff-Gehalt.

Die neuen Modifikationen haben im Vergleich zu dem Standard-Farbstoff die Filtrationsdauer drastisch verkürzt. Dies ist ein wichtiges Merkmal, da dieser Farbstoff typischerweise aus seinem Synthesebad durch Filtration gewonnen oder isoliert wird, wie aus Spalte 2, Zeilen 6 und 7, der US-PS 4 146 363 zu entnehmen ist. Je rascher sich diese Filtration durchführen lässt, desto effizienter läuft das Herstellungsverfahren ab. In einer Untersuchung bei 75°C mit 1200 g einer Aufschlämmung des Farbstoffs mit 12% Feststoff-Gehalt, einem Filterpapier Whatman #4 von 11 cm Durchmesser und einem Vakuum von 846 mbar (25″ Quecksilber) dauerte die Filtation der bevorzugten Modifikation gemäss der vorliegenden Erfindung zwischen 60 und 80 s, während die Filtration der Standard-Form typischerweise eine so lange Zeit wie 16 min dauerte. Die typische Filtrationszeit für die alternative Modifikation betrug etwa 10 min.

Die bevorzugte Modifikation gemäss der vorliegenden Erfindung verleiht einer wässrigen Dispersion eine sehr viel niedrigere Viskosität als die Standard-Form des Farbstoffs. Beispielsweise erzeugte in einer wässrigen Dispersion, die etwa 30 Gew.% Farbstoff, 7 Gew.% eines Natriumligninsulfonats und etwa 1 Gew.% Natriumchlorid enthielt, die Modifikation gemäss der vorliegenden Erfindung bei Raumtemperatur unter 12 Umdrehungen/min eine Viskosität von angenähert $15 \cdot 10^{-3}$ Pa.s (15 cP), während in einer ähnlichen Dispersion die Standard-Form bei Raumtemperatur unter 12 Umdrehungen/min eine Viskosität von 2,7 Pa.s (2700 cP) verursachte. In beiden Fällen war der Farbstoff der Kavitationsvermahlung unterworfen worden, durch die die dispergierten Teilchen eine mittlere Teilchengrösse von etwa 2 µm erhielten. In beiden Fällen wurde der pH der Dispersion auf etwa 7 eingestellt. Diese Erscheinung der niedrigeren Viskosität wird über einen breiten Bereich des Feststoff-Gehalts beobachtet. Beispielsweise weist eine 51,2 Gew.% (Farbstoff und Presskuchen-Salz umfassende) Feststoffe und etwa 5% des Natriumligninsulfonats enthaltende wässrige Dispersion bei Raumtemperatur unter 12 Umdrehungen/min eine Viskosität von etwa $25 \cdot 10^{-3}$ Pa.s (25 cP) auf, die nach Glasperlenvermahlung der Dispersion auf 2,2 Pa.s (2200 cP) unter 12 Umdrehungen/min anstieg. So erzeugt selbst bei nicht ganz der doppelten Feststoff-Beaufschlagung die bevorzugte Modifikation gemäss der vorliegenden Erfindung noch nicht eine so hohe Viskosität, wie sie die Standard-Form liefert. Das ist umso eindrucksvoller, wenn man berücksichtigt, dass die Glasperlenvermahlung typischerweise eine sehr viel feinere Teilchengrösse und demzufolge eine höhere Viskosität irgendeines dispergierten Materials ergibt, als die Kavitationsvermahlung. Somit ermöglicht die bevorzugte Modifikation gemäss der vorliegenden Erfindung die Herstellung von wässrigen Dispersionen mit Feststoff-Gehalten von 30 Gew.%, die unter 12 Umdrehungen/min bei Raumtemperatur Viskositäten unterhalb von etwa 1/10 Pa.s (100 cP) besitzen, und in ähnlicher Weise die Herstellung von wässrigen Dispersionen mit Feststoff-Gehalten von 50 Gew.%, die unter 12 Umdrehungen/min bei Raumtemperatur Viskositäten unterhalb von 3 Pa.s (3000 cP) besitzen.

Die bevorzugte Modifikation gemäss der vorliegenden Erfindung kann in signifikant reinerer Form gewonnen werden als die Standard-Form dieses Farbstoffs. Insbesondere zeigt diese Modifikation eine signifikant höhere Extinktion an dem $\lambda_{max}$-Absorptionspeak für den Farbstoff als die gleiche Gewichtsmenge der Standard-Form dieses Farbstoffs. Wenn beispielsweise beide Stoffe aus einem wässrigen Medium durch Filtration gewonnen, getrocknet und dann für die Spektroskopie mit sichtbarem Licht aufgelöst werden, ergibt die vorliegende Modifikation eine Stärke zwischen 256 und 266 mit einem Mittelwert von 262, während die Standard-Form eine Stärke zwischen 220 und 228 mit einem Mittelwert von etwa 226 zeigt. Der Basiswert von 100

entspricht der erwarteten Stärke des handelsüblich formulierten Farbstoffs Color Index Acid Blue 324 und wird als Pulvertyp-Äquivalent oder PTE bezeichnet.

Die Modifikationen gemäss der vorliegenden Erfindung können bei der Filtration aus wässrigem Medium in viel trockenerer Form erhalten werden, als dies bei der Standard-Form des Farbstoffs möglich ist. Der bei der Filtration der bevorzugten Modifikation gemäss der vorliegenden Erfindung erhaltene Presskuchen hat typischerweise einen Feststoff-Gehalt von etwa 86 Gew.%, und die alternative Modifikation ergibt typischerweise einen Feststoff-Gehalt von etwa 67 Gew.%, wohingegen der Pesskuchen der Standard-Form dieses Farbstoffs typischerweise einen Feststoff-Gehalt von etwa 50 Gew.% besitzt. Dies ist ein ausserordentlich wichtiger Vorteil, nicht nur bei der ursprünglichen Herstellung dieses Farbstoffs, sondern auch im Hinblick auf die Möglichkeiten seiner weiteren Handhabung. Wenn die Modifizierung gemäss der vorliegenden Erfindung vor der Isolierung des Farbstoffs aus seinem Synthesebad durchgeführt wird, können ganz beträchtliche Vorteile bei seiner Isolierung und der nachfolgenden Behandlung erzielt werden. Beispielsweise lassen sich bei der bevorzugten Modifikation rascher arbeitende Filtrationstechniken wie ein kontinuierliches Bandfilter einsetzen. Die Standard-Form des Farbstoffs muss typischerweise mit Hilfe des weniger effizienten chargenweise arbeitenden Verfahrens mit Hilfe einer Filterpresse isoliert werden. Weiterhin ist zum Trocknen des abgetrennten Farbstoffs sehr viel weniger Energie erforderlich, insbesondere wenn er der Plattentrocknung unterzogen wird. Dementsprechend lassen sich die beiden Modifikationen dadurch kennzeichnen, dass sie Filterrückstände mit Feststoff-Gehalten über 80% bzw. über 60% ergeben.

Die niedrige Viskosität von auf der bevorzugten Modifikation gemäss der vorliegenden Erfindung basierenden wässrigen Aufschlämmungen erlaubt die Anwendung einer alternativen Arbeitsweise des Trocknens und Standardisierens. Der Farbstoff kann sprühgetrocknet werden, wobei eine Aufschlämmung mit viel höherem Feststoff-Gehalt eingesetzt werden kann, als dies bei der Standard-Form möglich ist, was bedeutet, dass ein viel niedrigerer Wärmeaufwand am Sprühtrockner benötigt wird. Weiterhin wird angenommen, dass die Sprühtrocknung von Aufschlämmungen mit höheren Feststoff-Anteilen ein Pulver mit höherer Schüttdichte liefert, was das Verpacken grösserer Gewichtsmengen des Farbstoffs in kleineren Volumina ermöglicht. Typische Aufschlämmungen für die Sprühtrocknung weisen Feststoff-Gehalte zwischen etwa 20 und 30 Gew.% auf, während deutlich ist, dass die Modifikation gemäss der vorliegenden Erfindung als 40- oder 50prozentige Aufschwämmung eine hinreichend niedrige Viskosität besitzt, dass sie direkt sprühgetrocknet werden kann.

Die Modifikationen gemäss der vorliegenden Erfindung werden durch Erhitzen einer wässrigen Dispersion des Standart-Farbstoffs Color Index Acid Blue 324 erhalten. Die Anwesenheit eines Stoffes, der die Oberflächenspannung zwischen der organischen Farbstoff-Phase und dem wässrigen Dispersionsmedium erniedrigt, ist erforderlich, um die bevorzugte Modifikation zu gewinnen. Die Modifizierung findet bei einer Temperatur oberhalb von etwa 97°C statt. Das die Oberflächenspannung zwischen den Phasen senkende Material kann irgendeines der in der Technik bekannten Dispergiermittel oder oberflächenaktiven Mittel sein. Da das Farbstoff-Molekül von Color Index Acid Blue 324 eine Sulfonsäure-Gruppe trägt, wird die Verwendung kationischer Dispergiermittel oder oberflächenaktiver Mittel vermieden. Besonders bevorzugt sind anionische Dispergiermittel, insbesondere die Ligninsulfonate. Die US-PSen 3 770 371 und 4 110 073 enthalten beide umfangreiche Offenbarungen geeigneter Dispergiermittel. Geeignete Dispergiermittel lassen sich durch eine Molekülstruktur kennzeichnen, in der ein Molekülteil mit organischen Stoffen besonders gut verträglich ist und ein Molekülteil besonders gut mit Wasser verträglich ist. Die Verträglichkeit mit Wasser wird durch anionische Salz-Gruppen, insbesondere Carboxylat- oder Sulfonat-Gruppen, hervorgerufen.

Bevorzugte Dispergiermittel sind diejenigen, die eine oder mehrere Sulfonat-Gruppen enthalten, insbesondere solche, in denen das Gegenion ein Alkalimetall ist, und vor allen anderen die, in denen das Gegenion Natrium ist. Besonders bevorzugte Dispergiermittel sind die sulfonierten Kondensationsprodukte von Naphthalin und Formaldehyd und Lignisulfonate, wobei letzteres vor allen anderen bevorzugt wird. Besonders bevorzugt sind die Ligninsulfonate oder Derivate derselben, die Natrium-Salze sind, geringe oder fehlende Zucker-Gehalte besitzen, Molekulargewichte zwischen 5000 und 50 000 haben und zwischen 0,5 und 5 Sulfonsäure-Gruppen pro 1000 Molekulargewichts-Einheiten enthalten. Besonders bevorzugte Ligninsulfonate sind diejenigen der nichtfärbenden Art, die einem ungefärbten Strang keine nennenswerte Färbung verleihen.

Zu anderen geeigneten Dispergiermitteln zählen Alkylsulfonate, sulfonierte ungesättigte Fettsäuren, Sulfonate von Polycarbonsäureestern, Alkylbenzolsulfonate, sulfonierte aliphatische Alkohole, Kondensationsprodukte von Ethylen mit Amin, Fettsäuren, Phenolen oder Alkoholen, die dann mit Schwefelsäure behandelt und neutralisiert wurden, wodurch Salze erhalten werden, die in Wasser unter Bildung von Anionen dissoziieren. Spezielle Beispiele geeigneter Dispergiermittel umfassen Natriumdodecylsulfonat, Natriumlaurylsulfat, Dibutylnaphthylensulfonat, saure Schwefelsäureester der Kondensationsprodukte von Ethylenoxid mit Nonylphenol, Natriumdioctylsulfosuccinat, Kondensationsprodukte von Cresol, $NaHSO_3$ und Formaldehyd, Kondensationsprodukte von 2-Hydroxy-naphthylen-6-sulfonsäure mit Formaldehyd, Sulfonsäuren von Kondensationsprodukten von Naphthylen, Terphenyl oder Ditolylether mit Formaldehyd und

Kondensationsprodukte von Cyclohexanon mit Formaldehyd und $NaHSO_3$. Alle diese anionischen Dispergiermittel werden vorzugsweise in Form ihrer Alkali- und/oder Ammonium-Salze verwendet.

Die Modifikationen werden durch Erhitzen auf Temperaturen oberhalb von etwa 97°C erhalten. Es ist zweckmässig, die wässrige Dispersion zum Rückfluss zu erhitzen. Da diese Dispersion typischerweise Elektrolyt enthält, findet Rückfluss typischerweise bei Temperaturen zwischen etwa 102°C und 103°C statt. Bei einer zu niedrigen Temperatur wird im wesentlichen keine Umwandlung beobachtet, während bei einer genügend hohen Temperatur eine im wesentlichen vollständige Umwandlung zu beobachten ist.

Die Umwandlung in die Modifikationen gemäss der vorliegenden Erfindung schreitet ziemlich rasch fort, sobald eine geeignete Temperatur erreicht ist. Unter Rückfluss wurde vollständige Umwandlung in die bevorzugte Modifikation zwischen 3 und 6 Stunden erzielt, wobei die ersten der Parallelogramm-Kristalle nach 30 bis 45 Minuten beobachtet wurden. Die Geschwindigkeit dieser Reaktion wird sowohl durch den pH der behandelten wässrigen Dispersion als auch durch den Gehalt der Dispersion an Dispergiermittel etwas beeinflusst. Bei pH-Werten unter 7 wird die Umwandlung wesentlich verlangsamt, und bei einem pH 6 wird die Bildung der charakteristischen Parallelogramm-Kristalle von der Bildung erheblicher Mengen amorphen Farbstoffs und von Verunreinigungen begleitet. Die Filtration verläuft viel langsamer, der Feststoff-Gehalt des Filtrationsrückstands wird vermindert, und die spektrale Stärke des getrockneten Farbstoffs wird erniedrigt. Bei pH-Werten zwischen etwa 7 und 10 wird routinemässig die vollständige Umwandlung in die Modifikation gemäss der vorliegenden Erfindung erreicht, und die Umwandlungszeit scheint unabhängig von dem speziellen pH-Wert zu sein.

Die Umwandlung in die alternative Modifikation verläuft etwas langsamer, wobei die ersten hexagonalen Kristalle typischerweise nach einer Stunde auftreten und wesentliche Mengen dieser Kristalle nach zwei Stunden vorhanden sind. Eine vollständige Umwandlung ist etwas schwierig zu erzielen.

Es scheint eine optimale Menge Dispergiermittel zu geben, die die Zeit der Umwandlung in die bevorzugte Form minimiert. Für Natriumligninsulfonat scheint diese optimale Menge zwischen 1 und 7 Gew.%, bezogen auf das Gesamtgewicht der Dispersion, zu liegen. Beim Erhitzen von 1200 g der Reaktionsdispersion, die bei der Synthese von Color Index Acid Blue 324 erhalten wurde und einen Feststoff-Gehalt von etwa 12% und einen pH von etwa 8,4 aufwies, in Kombination mit Natriumligninsulfonat zum Rückfluss wurde die nachstehende Korrelation erhalten:

| Menge Dispergiermittel | Umwandlungszeit |
|---|---|
| 1% | 4,5 Stunden |
| 4% | 3 Stunden |
| 7% | 4 Stunden |
| 10% | 6 Stunden |

Die Umwandlung wurde beurteilt aufgrund der mikroskopischen Untersuchung der behandelten Farbstoffe. Die Umwandlung wurde als vollständig beurteilt, wenn der gesamte Farbstoff in Form der Parallelogramm-Kristalle vorzuliegen schien. Alle vier der vorstehenden Dispersionen liessen sich im Laufe von Zeitspannen zwischen 1 und 2 Minuten filtrieren.

Die Umwandlung lässt sich auch beurteilen aufgrund der Viskosität der in Behandlung befindlichen Aufschlämmung. Bei der Umwandlung wird sie praktisch dünn wie Wasser, d.h. die Viskosität bei 12 Umdrehungen/min ist kleiner als $25 \cdot 10^{-3}$ Pa.s (25 cP).

Der Feststoff-Gehalt der behandelten wässrigen Dispersion ist nicht kritisch, solange sich etwas des behandelten Farbstoffs bei der Behandlungstemperatur nicht in Lösung befindet. Wenn hinreichende Mengen Farbstoff-Feststoffe bei der Herstellung der Dispersion eingesetzt werden, ist Farbstoff in einer die Grenzen der Löslichkeit bei der Behandlungstemperatur überschreitenden Menge vorhanden. Daneben kann der Dispersion willkürlich Elektrolyt zugesetzt werden, um die Unlöslichkeit des Farbstoffs bei der Behandlungstemperatur zu gewährleisten. Weiterhin haben aus einer typischen Synthese gewonnene Farbstoffe zwangsläufig einen gewissen Elektrolyt-Gehalt, der ausreichend sein kann. Offensichtlich ist es jedoch nicht kritisch, wenn sich bei der Behandlungstemperatur sämtlicher Farbstoff ausserhalb der Lösung befindet, und tatsächlich können geeignete Dispersionen ein Ausbluten zeigen, was etwas gelösten Farbstoff selbst bei Raumtemperatur anzeigt.

Jeder Elektrolyt, auf den die klassische Definition zutrifft, kann geeigneterweise in der vorliegenden Erfindung eingesetzt werden. Diese Stoffe sind in typischer Weise durch hohe Wasserlöslichkeit und niedriges Molekulargewicht gekennzeichnet. Die wasserlöslichen Salze anorganischer oder organischer ein- oder mehrbasiger Säuren, die in der US-PS 3 770 371 beschrieben sind, gehören zu den geeigneten Stoffen, auf die in der vorliegenden Erfindung als Elektrolyte Bezug genommen wird. Die Alkalimetall- oder Ammonium-Salze werden besonders bevorzugt, vor allem diejenigen der Mineralsäuren oder niedermolekularen organischen Säuren wie Essigsäure oder Oxalsäure. Salze der Salzsäure, Schwefelsäure und der verschiedenen Säuren auf Phosphor-Basis werden besonders bevorzugt. Zu geeigneten Salzen zählen Natriumacetat, Lithiumchlorid, Lithiumsulfat, Natriumchlorid, Natriumsulfat, Kaliumchlorid, Kaliumsulfat, Ammoniumchlorid und Ammoniumsulfat. Das hinsichtlich seiner Verfügbarkeit und seiner Kosten vor allen anderen bevorzugte Salz ist Natriumchlorid.

Die Gesamtmenge oder ein Teil des zur Unterdrückung der Löslichkeit des Color Index Acid Blue 324 verwendeten Elektrolyts kann in diesem Farbstoff als Ergebnis des Verfahrens seiner Synthese und seiner Isolierung vorhanden sein. In diesem Zusammenhang wird der Farbstoff aus dem wohlbekannten Zwischenprodukt Bromaminsäure (1-Amino-4-bromoanthrachinon-2-sulfonsäure) synthetisiert, und die Synthese aus diesem Zwischenprodukt liefert typischerweise einen Farbstoff mit einem bestimmten darin enthaltenen Elektrolyt-Gehalt. Weiterhin kann die Synthese dieses Farbstoffs auch den Zusatz von Natriumsulfat zu seiner Ausfällung aus dem Synthesebad einschliessen.

Das Ausgangsmaterial des Color Index Acid Blue 324 kann in mannigfacher Form vorliegen. Wenn es in Form der absolut reinen chemischen Verbindung eingesetzt wird, kann es erforderlich sein, dem zur Durchführung der Modifizierung verwendeten Bad einen Elektrolyt zuzusetzen. Andererseits enthalten sowohl der typische Presskuchen dieses Farbstoffs als auch die bei der typischen Synthese vor der Isolierung durch Filtration anfallende wässrige Dispersion offenbar genügend Elektrolyt, so dass sie direkt in dem Modifizierungsverfahren gemäss der vorliegenden Erfindung eingesetzt werden können.

Für die Gewinnung der bevorzugten Form ist es kritisch, dass eine Mindestmenge eines die Oberflächenspannung senkenden Materials, bezogen auf das Gewicht des behandelten Farbstoffs, eingesetzt wird. Beispielsweise kann bei einer Reaktionsdispersion, die einen Feststoff-Gehalt von etwa 12% besitzt, die vollständige Umwandlung in etwa 4 ½ Stunden erreicht werden durch Verwendung von 1 Gew.% Natriumligninsulfonat, bezogen auf das Gesamtgewicht der Dispersion. Dies entspricht einem Verhältnis des oberflächenaktiven Mittels zu dem Farbstoff von etwa 0,08. Wenn andererseits 1 Gew.% des gleichen Dispergiermittels, bezogen auf das Gesamtgewicht der Dispersion, bei einer Dispersion mit einem Feststoff-Gehalt von etwa 22% eingesetzt wird, wird die Umwandlung in die alternative Modifikation bewirkt. Dies entspricht einem Verhältnis des oberflächenaktiven Mittels zu dem Farbstoff von etwa 0.045. Aus diesem Grunde wird angenommen, dass ein Verhältnis Dispergiermittel zu Farbstoff, das grösser als 0,05 ist, notwendig ist, um die Umwandlung in die bevorzugte Form zu bewirken.

Die Erfindung wird durch die folgenden Beispiele näher erläutert, ist jedoch nicht als auf diese beschränkt anzusehen. In den Beispielen beziehen sich alle Angaben von Teilen und Prozentsätzen auf das Gewicht, sofern nichts anderes angegeben ist.

Beispiele:

Beispiel 1

Die bevorzugte Modifikation gemäss der vorliegenden Erfindung wurde dadurch hergestellt, dass 600 g eines technisch gewonnenen Presskuchens von Color Index Acid Blue 324 mit einem Feststoff-Gehalt von 50% und 76 g Natriumligninsulfonat mit einem Wasser-Gehalt von 6 g zu 324 g Wasser hinzugegeben wurden. Die Betrachtung dieses Ausgangsmaterials unter dem Mikroskop bei 160facher und 640facher Vergrösserung ergab, dass es aus dünnen spitzen Nadeln mit einer Länge zwischen etwa 8 und 10 µm bestand. Der pH dieser wässrigen Dispersion oder Aufschlämmung wurde mit einer 20proz. Phosphorsäure-Lösung auf 7,4 eingestellt. Diese Aufschlämmung wurde dann zum Rückfluss erhitzt, auf etwa 102°C, und etwa 18 h bei dieser Temperatur gehalten. Proben des in Behandlung befindlichen Materials wurden periodisch mikroskopisch untersucht. Keine Veränderung wurde beobachtet, bis nach etwa 45 min wohlausgebildete scharfkantige Parallelogramme beobachtet wurden. Nach 2stündiger Behandlung wurden keine für den Presskuchen des Ausgangsmaterial kennzeichnenden Nadeln mehr beobachtet. Während der restlichen Zeit der 18 h wurde keine weitere Veränderung des in Behandlung befindlichen Farbstoffs beobachtet.

Der modifizierte Farbstoff wurde durch Kühlen auf 30°C und anschliessende Filtration isoliert. Unter Benutzung eines Whatman #4-Filterpapiers von 11 cm Durchmesser und einem Vakuum von 846 mbar (25″ Quecksilber) war die Filtration in weniger als 1 min beendet. Der Feststoff-Gehalt des Filterrückstands wurde als Differenz zum Feuchtigkeits-Gehalt zu 86,3 Gew.% gefunden.

Beispiel 2

Die alternative Modifikation gemäss der vorliegenden Erfindung wurde dadurch hergestellt, dass 600 g des gleichen Presskuchens, wie er in Beispiel 1 eingesetzt wurde, d.h. eines technisch gewonnenen Presskuchens von Color Index Acid Blue 324 mit einem Feststoff-Gehalt von 50% zu 400 g Wasser hinzugegeben wurden. Der pH der Aufschlämmung wurde mit 20-proz. Phosphorsäure auf 7,4 eingestellt, und danach wurde sie 24 h zum Rückfluss erhitzt. Dann wurde sie auf 30°C gekühlt und in der gleichen Weise wie in Beispiel 1 filtriert. Die Filtration dauerte etwa 2 h und lieferte einen Filterrückstand mit einem Feststoff-Gehalt, bestimmt als Differenz zum Feuchtigkeits-Gehalt, mit 67,6 Gew.%. Bei der mikroskopischen Untersuchung wurde gefunden, dass der Farbstoff in Form hexagonaler Kristalle vorlag, die deutlich von den Parallelogrammen des Beispiels 1 verschieden waren.

Beispiel 3

Die bevorzugte Modifikation wurde auch erhalten durch Behandlung einer Reaktionsdispersion, die bei der technischen Synthese von Color Index Acid Blue 324 anfiel. 1200 g einer bei einem technischen Syntheseverfahren vor der Filtration erhaltenen Reaktionsdispersion wurden mit 91,3 g Natriumligninsulfonat mit einem Feststoff-Gehalt von 92,0% versetzt. Die Dispersion hatte einen pH von 8,4 und wurde etwa 18 h zwischen 102°C und

103°C unter Rückfluss gehalten. Die Mischung wurde auf 75°C gekühlt und durch ein Whatman #4-Filterpapier von 11 cm Durchmesser bei einem Vakuum von 846 mbar (25″ Quecksilber) filtriert. Die Filtration dauerte etwa 60 s und ergab einen Filterrückstand mit einem Feststoff-Gehalt, bestimmt als Differenz zum Feuchtigkeits-Gehalt, von 87,1 Gew.%. Die mikroskopische Betrachtung des isolierten Farbstoffs ergab, dass er in Form scharfkantiger Parallelogramme mit mittleren Seitenlängen zwischen 20 und 50 µm vorlag.

Beispiel 4

Die alternative Modifikation wurde ebenfalls aus einer Reaktionsdispersion hergestellt. 1200 g der in Beispiel 3 eingesetzten Reaktionsdispersion wurden 22 h unter Rückfluss gehalten. Der in Behandlung befindliche Farbstoff wurde periodisch während dieser Zeit mikroskopisch untersucht. Nach etwa 1stündiger Behandlung begannen hexagonale Kristalle in Erscheinung zu treten, und eine signifikante Menge solcher Kristalle war nach etwa 2 h vorhanden. Jedoch spitze dünne Nadeln, die für das Ausgangsmaterial kennzeichnend sind, waren noch nach 6 h vorhanden, und nach der vollen Behandlungsdauer von 22 h war die Umwandlung in hexagonale Kristalle nicht vollständig. Die so behandelte Reaktionsdispersion wurde in der gleichen Weise wie in Beispiel 3 filtriert, wobei bis zur Vervollständigung der Filtration etwa 550 s vergingen. Der Filterrückstand hatte einen Feststoff-Gehalt, bestimmt als Differenz zum Feuchtigkeits-Gehalt, von 66,8 Gew.%. Die Filtration der im wesentlichen gleichen Dispersion ohne thermische Behandlung dauerte unter den gleichen Bedingungen etwa 16 min und ergab einen Filterrückstand mit einem Feststoff-Gehalt, bestimmt als Differenz zum Feuchtigkeits-Gehalt, von 49,8 Gew.%. Bei der mikroskopischen Untersuchung schienen die hexagonalen Kristalle ein Verhältnis Länge zu Breite von etwa 5 bis 6 zu 1 und eine typische Seitenlänge von etwa 150 µm aufzuweisen. Die Röntgenographie bestätigte, dass dieses Material eine Kristallform besass, die verschieden sowohl von derjenigen des Ausgangsstoffes Color Index Acid Blue 324 als auch von derjenigen der bevorzugten Modifikation war. Sie zeigte eine sehr starke Reflexion, die für einen Abstand d von 1,4 nm (14 Å) repräsentativ war, sowie eine ziemlich starke, für einen Abstand d von 0,46 nm (4,6 Å) repräsentative Reflexion. Schwache Reflexionen, die Abständen d von 0,54 nm und 0,45 n (5,4 Å und 4,5 Å) entsprachen, wurden beobachtet, jedoch wurden keine weiteren signifikanten Peaks beobachtet.

Beispiel 5

Behandlungs-Dispersionen oder -Aufschlämmungen wurden aus 440 g und 600 g eines Presskuchens von Color Index Acid Blue 324 mit einem Feststoff-Gehalt von 50% hergestellt. Diese Aufschlämmungen enthielten ausserdem etwa 11 g Natriumligninsulfonat mit 92% Feststoff-Gehalt und genügend Wasser, dass die gesamte Aufschlämmung 1000 g wog. Beide Aufschlämmungen hatten demnach einen Gehalt an oberflächenaktivem Mittel von 1% und Verhältnisse von oberflächenaktivem Mittel zu Farbstoff von 0,05 bzw. 0,033. Beide Aufschlämmungen wurden dann 18 h zum Rückfluss erhitzt und in der Weise von Beispiel 1 filtriert, d.h. unter Kühlen auf 30°C und Aufgeben auf ein Whatman #4-Filterpapier von 11 cm Durchmesser und bei einem Vakuum von 846 mbar (25″ Quecksilber). Die Filtration gelang sehr schlecht. Die mikroskopische Untersuchung ergab, dass das behandelte Material in Form der gleichen hexagonalen Kristalle wie in den Beispielen 2 und 4 vorlag.

Beispiel 6

Eine wässrige Dispersion wurde hergestellt aus 59 Gew.% des Filterkuchens mit einem Feststoff-Gehalt von 86 Gew.%, der durch Isolierung der Modifikation gemäss der vorliegenden Erfindung und 5 Gew.% Natriumligninsulfonat mit einem Feststoff-Gehalt von 92%. Diese Dispersion wurde der Zerkleinerung in einer Glasperlenmühle unterworfen, so dass die dispergierten Teilchen eine mittlere Teilchengrösse von etwa 1 µm aufwiesen. Diese Dispersion hatte bei Raumtemperatur und 12 Umdrehungen/min eine Viskosität von 2,25 Pa.s (2250 cP). Nach Ablauf von 21 Tagen war die Dispersion immer noch beständig.

Beispiel 7

Eine wässrige Aufschlämmung wurde hergestellt aus 440 g Color Index Acid Blue 324 mit einem Feststoff-Gehalt von 50% und 560 g Wasser. Der Farbstoff lag in Form dünner spitzer Nadeln vor. Der pH der Aufschlämmung wurde mit 20proz. Phosphorsäure auf 7,3 eingestellt. Die Aufschlämmung wurde zum Rückfluss, auf etwa 102°C, erhitzt und 24 h auf dieser Temperatur gehalten. Das Material wurde auf 30°C gekühlt und dann auf ein Whatman #4-Filterpapier von 11 cm Durchmesser gegeben, und ein Vakuum von 846 mbar (25″ Quecksilber) wurde angelegt. Das Material war äusserst schwierig zu filtrieren, und nach 18 h wurde immer noch Flüssigkeit zurückgehalten. Der Farbstoff lag nunmehr vollständig in der Form länglicher hexagonaler Kristalle vor, die ein Verhältnis Länge zu Breite von 5–6 zu 1 und eine mittlere Länge von etwa 150 µm aufwiesen und den in den Beispielen 2, 4 und 5 beobachteten stark ähnelten.

**Patentansprüche**

1. Modifikation des Farbstoffs C.I. Acid Blue 324 charakterisiert durch eine Reihe sehr starker bis mässig starker Reflexionen im Debye-Scherrer-Röntgenbeugungsdiagramm, welche den folgenden Gitterebenenabständen d entsprechen: 1,40, 0,68, 0,57, 0,54, 0,46, 0,45, 0,375 und 0,329 nm (14,0, 6,8, 5,7, 5,4, 4,6, 4,5, 3,75 und 3,29 Å)

2. Modifikation des Farbstoffes C.I. Acid Blue 324 charakterisiert durch starke Reflexionen im Debye-Scherrer-Röntgenbeugungsdiagramm,

welche Gitterebenenabständen von d gleich 1,42 und 0,46 nm (14,2 und 4,6 Å) entsprechen.

3. Verfahren zur Herstellung einer verbesserten Form des Farbstoffs der Strukturformel

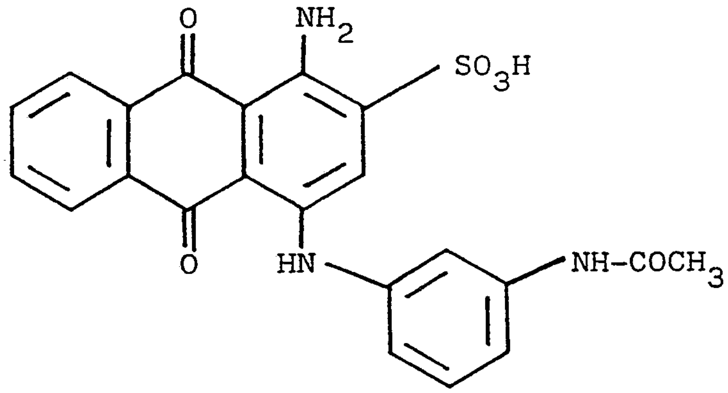

dadurch gekennzeichnet, dass der Farbstoff in einem wässrigen Medium mit einem pH zwischen 7 und 10, das ausserdem einen die Oberflächenspannung zwischen dem Farbstoff und dem wässrigen Medium erniedrigenden Stoff in solcher Menge enthält, dass das Gewichtsverhältnis dieses Stoffes zu dem Farbstoff grösser als etwa 0,05 ist, aufgeschlämmt wird und die Aufschlämmung bei einer Temperatur oberhalb von 97°C gehalten wird, bis der Farbstoff in Form scharfkantiger Parallelogramme vorliegt.

4. Verfahren nach Anspruch 3, dadurch gekennzeichnet, dass das die Oberflächenspannung erniedrigende Material ein oberflächenaktives Mittel oder Dispergiermittel ist.

5. Verfahren nach Anspruch 4, dadurch gekennzeichnet, dass das Dispergiermittel oder oberflächenaktive Mittel anionisch ist.

**Revendications**

1. Modification du colorant «bleu acide, indice de coloration 324», caractérisée par une série de réflexions très fortes à modérément fortes dans le diagramme de diffraction des rayons X de Debye-Scherrer, ces réflexions correspondant aux distances d des plans de réseau ci-après: 1,40, 0,68, 0,57, 0,54, 0,46, 0,45, 0,375 et 0,329 nm (14,0 6,8, 5,7, 5,4, 4,6, 4,5, 3,75 et 3,29 Å).

2. Modification du colorant «bleu acide, indice de coloration 324», caractérisée par de fortes réflexions dans le diagramme de diffraction des rayons X de Debye-Scherrer, ces réflexions correspondant à des distances d des plans de réseau égales à 1,42 et 0,46 nm (14,2 et 4,6 Å).

3. Procédé de préparation d'une forme améliorée du colorant de formule structurale:

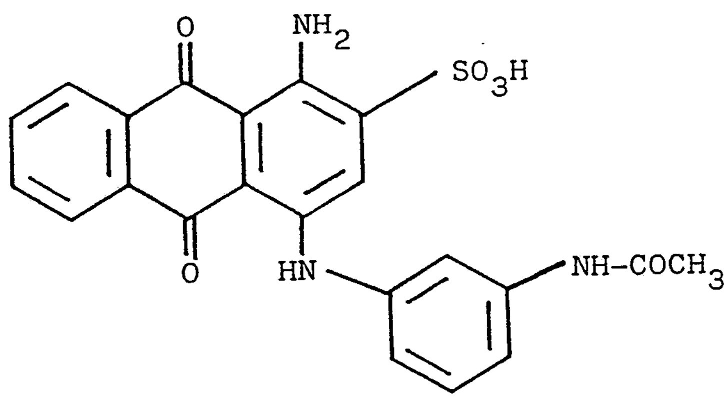

caractérisé en ce qu'on met le colorant en suspension dans un milieu aqueux ayant un pH se situant entre 7 et 10 et qui, en outre, contient une substance abaissant la tension superficielle entre le colorant et le milieu aqueux, en une quantité telle que le rapport pondéral de cette substance au colorant soit supérieur à environ 0,05, puis on maintient la suspension à une température supérieure à 97°C jusqu'à ce que le colorant se présente sous forme de parallélogrammes à arêtes vives.

4. Procédé selon la revendication 3, caractérisé en ce que la matière abaissant la tension superficielle est un agent dispersant ou un agent tensio-actif.

5. Procédé selon la revendication 4, caractérisé en ce que l'agent dispersant ou l'agent tensio-actif est anionique.

**Claims**

1. Modification of the dyestuff C.I. Acid Blue 324, characterized by a number of very strong to moderate reflections in the Debye-Scherrer X-ray diffraction diagram which correspond to the following lattice plane spacings d: 1.40, 0.68, 0.57,

0.54, 0.46, 0.45, 0.375 and 0.329 nm (14.0, 6.8, 5.7, 5.4, 4.6, 4.5, 3.75 and 3.29 Å).

2. Modification of the dyestuff C.I. Acid Blue 324, characterized by strong reflections in the Debye-Scherrer X-ray dye diffraction diagram which correspond to lattice plane spacings of d equal to 1.42 and 0.46 nm (14.2 and 4.6 Å).

3. Process for preparing an improved form of the dyestuff of the structural formula

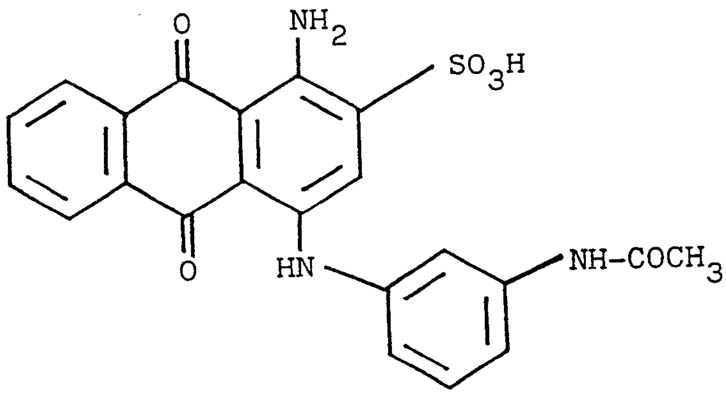

characterized in that the dyestuff is suspended in an aqueous medium which has a pH between 7 and 10 and which also contains a substance reducing the surface tension between the dyestuff and the aqueous medium in such an amount that the weight ratio of the substance to the dyestuff is greater than about 0.05, and the suspension is maintained at a temperature above 97°C until the dyestuff is present in the form of sharp-edged parallelograms.

4. Process according to Claim 3, characterized in that the material reducing the surface tension is a surface-active agent or dispersant.

5. Process according to Claim 4, characterized in that the dispersant or surface-active agent is anionic.

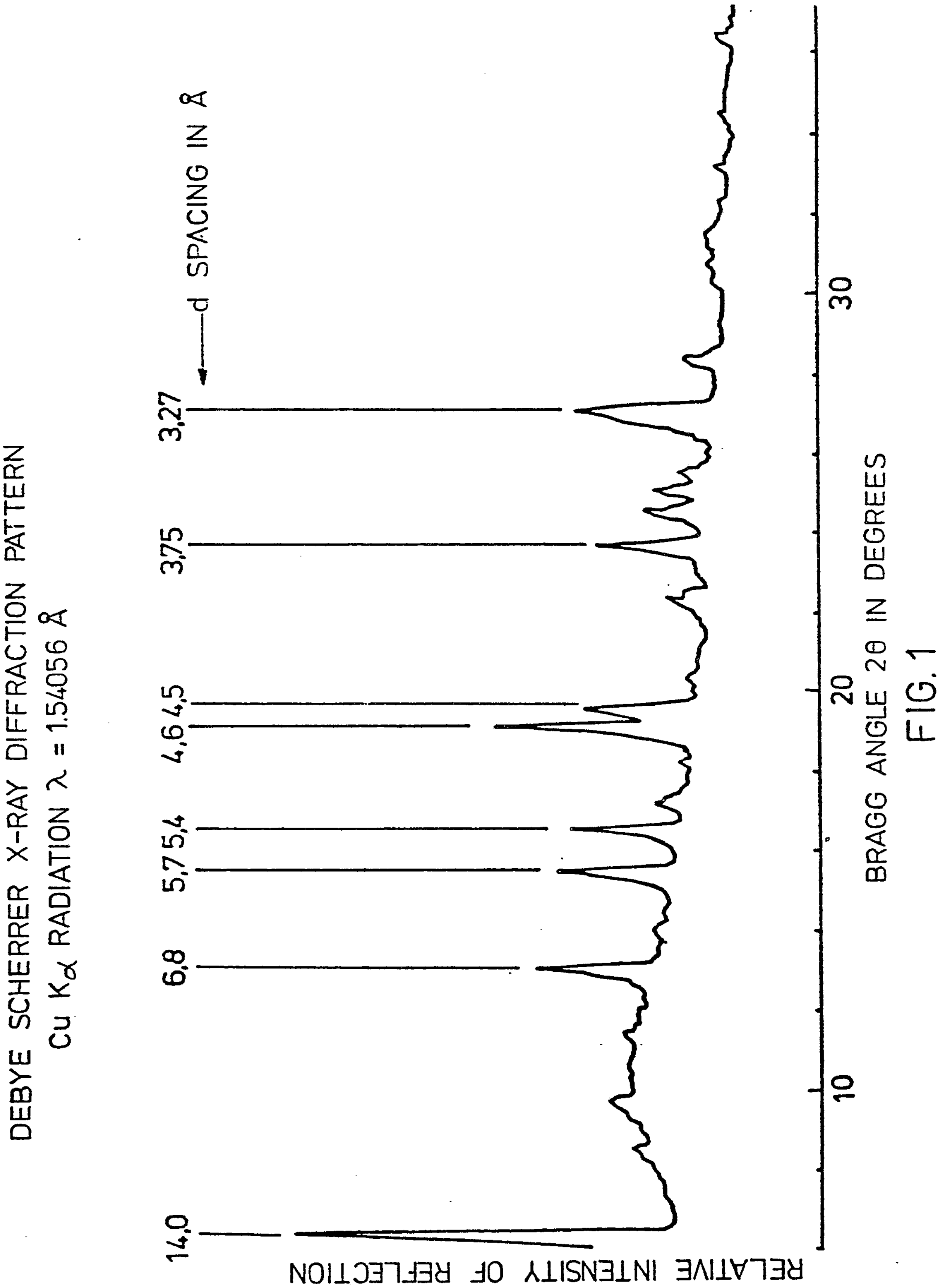
DEBYE SCHERRER X-RAY DIFFRACTION PATTERN
Cu Kα RADIATION λ = 1.54056 Å
d SPACING IN Å
14,0
6,8
5,7
5,4
4,6
4,5
3,75
3,27
10
20
30
BRAGG ANGLE 2θ IN DEGREES
RELATIVE INTENSITY OF REFLECTION

FIG.1

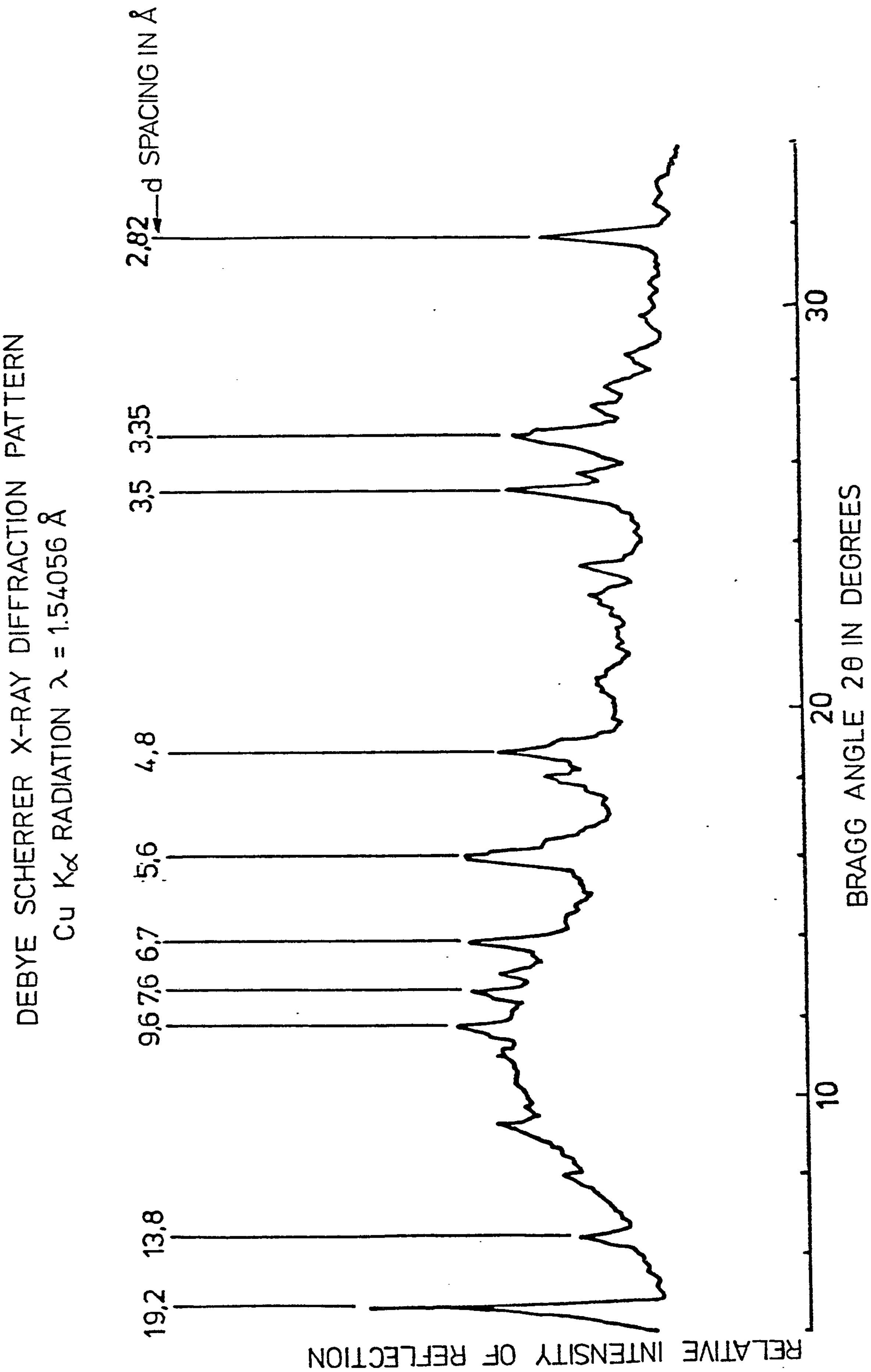
DEBYE SCHERRER X-RAY DIFFRACTION PATTERN
Cu Kα RADIATION λ = 1.54056 Å
19,2
13,8
9,6
7,6
6,7
5,6
4,8
3,5
3,35
2,82
d SPACING IN Å
RELATIVE INTENSITY OF REFLECTION
10
20
30
BRAGG ANGLE 2θ IN DEGREES

FIG. 2